# EUROPEAN PATENT APPLICATION

(11) **EP 4 734 007 A1**
(43) Date of publication of application: **29.04.2026**
(21) Application number: 25210252.0
(22) Date of filing: 22.10.2025
(51) Int. Cl.: G06N 5/022, G06N 20/00

(54) **INFORMATION PROCESSING PROGRAM, INFORMATION PROCESSING METHOD, AND INFORMATION PROCESSING DEVICE**

(30) Priority: 25.10.2024 JP 2024188670
(71) Applicant: FUJITSU LIMITED, Kawasaki-shi, Kanagawa 211-8588 (JP)
(72) Inventor: SUZUKI, Hirofumi, Kawasaki-shi, Kanagawa, 211-8588 (JP)
(74) Representative: Hoffmann Eitle

(57) **Abstract**

An information processing program for causing a computer to execute a process, the process including: classifying a plurality of items in to a plurality of groups; searching for a causal order so as to increase a likelihood of an estimation result of a regression model, the causal order indicating a presence of a causal relationship in a direction from one group to another group between at least some of the plurality of groups, the regression model estimating a value of a downstream item based on a value of an upstream item in a causal relationship; and outputting a directed acyclic graph generated based on the discovered causal order and representing a presence of a causal relationship in a direction from one item to another item, between at least some of the plurality of items.

## Description

### FIELD

The embodiments discussed herein are related to an information processing program, an information processing method, and an information processing device.

### BACKGROUND

Conventionally, there is a causal search technique that estimates a causal graph representing item-to-item causal relationships among multiple items. The causal graph is, for example, a directed acyclic graph.

One prior art, for example, utilizes a causal model that determines possible causal relationships between variables to determine variable-to-variable causal relationships in a variable set, based on the types of variables in the variable set, which is observation data. For example, refer to Japanese Laid-Open Patent Publication No. 2022-013844.

### SUMMARY

It is an object in one aspect of the embodiments to at least solve the above problems in the conventional technologies.

According to an aspect of an embodiment, an information processing program for causing a computer to execute a process, the process including: classifying a plurality of items in to a plurality of groups; searching for a causal order so as to increase a likelihood of an estimation result of a regression model, the causal order indicating a presence of a causal relationship in a direction from one group to another group between at least some of the plurality of groups, the regression model estimating a value of a downstream item based on a value of an upstream item in a causal relationship; and outputting a directed acyclic graph generated based on the discovered causal order and representing a presence of a causal relationship in a direction from one item to another item, between at least some of the plurality of items.

### BRIEF DESCRIPTION OF DRAWINGS

Fig. 1 is an explanatory diagram depicting one example of an information processing method according to an embodiment.
Fig. 2 is an explanatory diagram depicting an example of an information processing system 200.
Fig. 3 is a block diagram of an example of a hardware configuration of an information processing device 100.
Fig. 4 is a block diagram depicting an example of a functional configuration of the information processing device 100.
Fig. 5 is an explanatory diagram depicting an example of operation of information processing device 100.
Fig. 6 is an explanatory diagram depicting a specific example of operation of the information processing device 100.
Fig. 7 is an explanatory diagram depicting a specific example of the operation of the information processing device 100.
Fig. 8 is an explanatory diagram depicting a specific example of the operation of the information processing device 100.
Fig. 9 is an explanatory diagram depicting a specific example of the operation of the information processing device 100.
Fig. 10 is a flowchart depicting an example of an overall processing procedure.
Fig. 11 is a flowchart depicting an example of a procedure of an insert process.
Fig. 12 is a flowchart depicting an example of a procedure of a swap process.
Fig. 13 is a flowchart depicting an example of a procedure of a reverse process.

### DESCRIPTION OF EMBODIMENTS

First, problems associated with the conventional techniques are discussed. For example, in the prior art, it is difficult to accurately estimate a causal graph. For example, it may be difficult to estimate a causal graph that reflects the presence or absence of a causal relationship between known items. For example, it is difficult to estimate a causal graph that reflects the absence of not only direct but also indirect causal relationships between items.

Embodiments an information processing program, an information processing method, and an information processing device according to the present disclosure are described in detail with reference to the accompanying drawings.

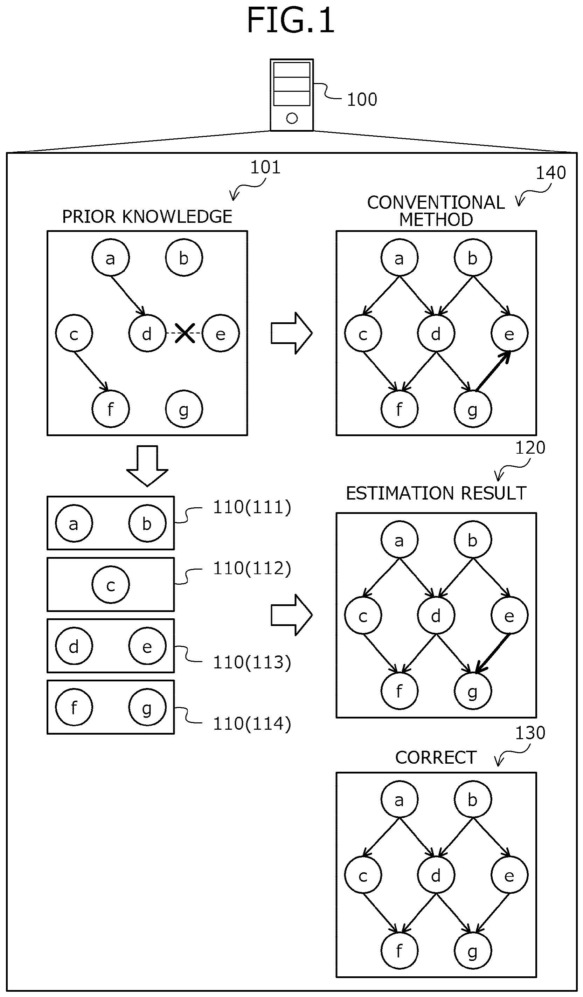

Fig. 1 is an explanatory diagram depicting one example of an information processing method according to an embodiment. An information processing device 100 is a computer for facilitating estimation of a causal graph. The information processing device 100 is, for example, a server or a personal computer (PC).

The causal graph represents causal relationships between multiple items. The causal graph is, for example, a directed acyclic graph. In the following description, the directed acyclic graph may be referred to as a "DAG." The causal graph, for example, includes nodes, respectively, corresponding to multiple items. The causal graph, for example, includes directed edges coupling nodes. A directed edge indicates that there is a causal relationship between two connected nodes, from an item corresponding to one node to an item corresponding to the other node.

Conventionally, there are causal search technologies for automatically estimating a causal graph. For example, it is conceivable to estimate a causal graph based on multiple combinations of values of multiple items. The multiple combinations of the respective values of the item are specified, for example, by tabular data.

It is, however, difficult to accurately estimate a causal graph. For example, a causal graph may be estimated that erroneously represents items that do not actually have a causal relationship as having a causal relationship. Furthermore, for example, a causal graph may be estimated that erroneously represents the direction of the causal relationship between items. As a result, a causal graph may be estimated that does not conform to the user's prior knowledge regarding the presence or absence of a causal relationship between known items.

Thus, it is desirable to estimate a causal graph that reflects the user's prior knowledge regarding the presence or absence of a causal relationship between any known items. In response to this, a method may be considered that estimates a causal graph that reflects a user's prior knowledge regarding the presence or absence of a direct causal relationship between any known items. For example, when the user has prior knowledge of items that do not have a direct causal relationship with each other, a causal graph may be estimated under a constraint that no directed edges couple the nodes corresponding to these items.

Even with this method, a causal graph that is estimated may not conform to the user's prior knowledge regarding the presence or absence of a causal relationship between known items, making it difficult to accurately estimate a causal graph. For example, there may be a case where the user has prior knowledge of items that do not have a causal relationship, not only directly but also indirectly. This method has a problem in that it is difficult to estimate a causal graph that reflects the user's prior knowledge regarding the presence or absence of an indirect causal relationship between items.

For example, with this method, when the user has prior knowledge of items that do not have a causal relationship, even indirectly, then a causal graph is estimated under a constraint that comprehensively prohibits indirect causal relationships between the items. Therefore, this method may need the setting of an exponential number of constraints, which may increase the user's workload and the processing time necessary to estimate a causal graph.

Thus, it is desirable to estimate a causal graph that reflects the user's prior knowledge regarding the presence or absence of not only direct but also indirect causal relationships between items.

Thus, the present embodiment describes an information processing method that may accurately estimate a causal graph. For example, this information processing method facilitates estimation of a causal graph that reflects the user's prior knowledge regarding the presence or absence of not only direct but also indirect causal relationships between items.

The information processing device 100 stores multiple items. In the example depicted in Fig. 1, the multiple items are, for example, seven items: item a, item b, item c, item d, item e, item f, and item g. The information processing device 100 stores tabular data representing multiple combinations of values for each of the multiple items.

The information processing device 100 stores prior knowledge indicating whether there is a causal relationship between at least some known items. The information processing device 100 obtains and stores the prior knowledge by, for example, receiving input of prior knowledge based on user's operation input via an input device (not depicted).

The prior knowledge indicates, for example, whether there is a direct or indirect causal relationship between at least some items specified by the user. For example, the prior knowledge indicates two or more items specified by the user that have neither a direct nor indirect causal relationship. For example, the prior knowledge indicates two or more items specified by the user that have a direct or indirect causal relationship.

In the example depicted in Fig. 1, the prior knowledge, for example, indicates that there is neither a direct nor indirect causal relationship between item d and item e, as depicted in Graph 101. Furthermore, the prior knowledge, for example, indicates that there is a direct causal relationship between item a and item d, as depicted in Graph 101. For example, the prior knowledge indicates that there is a direct causal relationship between item c and item f, as depicted in Graph 101.

(1-1) The information processing device 100 classifies multiple items into multiple groups 110 based on the prior knowledge. The information processing device 100 classifies the multiple items into the multiple groups 110, for example, such that two or more items that have no direct or indirect causal relationship are classified into the same group 110. The information processing device 100 may classify the multiple items into the multiple groups 110, for example, such that two or more items that have a direct causal relationship are classified into different groups 110 and such that two or more items that have no direct or indirect causal relationship are classified into the same group 110.

In the example depicted in Fig. 1, the information processing device 100, for example, classifies seven items, namely, item a, item b, item c, item d, item e, item f, and item g, into four groups 110, namely, a group 111, a group 112, a group 113, and a group 114. For example, item a and item b belong to the group 111. For example, item c belongs to the group 112. For example, item d and item e belong to the group 113. For example, item f and item g belong to the group 114. As described, the information processing device 100 may make preparations for specifying a causal order that allows the prior knowledge to be reflected in the causal graph by reflecting the prior knowledge in the grouping.

(1-2) The information processing device 100 searches for a causal order that indicates, among the multiple groups 110, the presence of a causal relationship between at least some of the multiple groups 110, in a direction from one group 110 to another group 110. The information processing device 100 searches for a causal order so as to increase the likelihood of an estimation result of a regression model that estimates the value of a downstream item, based on the value of an upstream item in the causal relationship. The regression model corresponds to a DAG, which is generated based on the causal order and represents the presence of a causal relationship from one item to another among multiple items. The DAG is generated using tabular data, for example.

In the example depicted in Fig. 1, the information processing device 100, for example, identifies a causal order as a result of the search, which is the order of the groups 111, 112, 113, and 114. This allows the information processing device 100 to identify an appropriate causal order corresponding to the prior knowledge so as to identify a causal graph that reflects the prior knowledge, and to identify a preferred causal graph corresponding to a causal order.

(1-3) The information processing device 100 outputs a DAG generated based on the discovered causal order. The DAG corresponds to a causal graph. The DAG is generated, for example, using tabular data. The information processing device 100 outputs a DAG generated during the search process, for example, corresponding to the discovered causal order. The information processing device 100 may generate and output a DAG based on the discovered causal order.

In the example depicted in Fig. 1, the information processing device 100, for example, outputs a DAG 120 corresponding to the discovered causal order as a causal graph. This allows the information processing device 100 to accurately estimate a causal graph based on prior knowledge. The information processing device 100 may make available a DAG that reflects prior knowledge.

For example, the information processing device 100 may prevent the estimation of a causal graph that erroneously represents items that do not actually have a causal relationship as having a causal relationship, based on prior knowledge. The information processing device 100 may prevent the estimation of a causal graph that erroneously represents the direction of the causal relationship between items, based on prior knowledge, for example.

The information processing device 100 may estimate, for example, a causal graph based on prior knowledge. For example, when prior knowledge indicates that some items have no direct or indirect causal relationship therebetween, the information processing device 100 may estimate a causal graph without setting constraints that comprehensively prohibit indirect causal relationships between those items. Thus, the information processing device 100 may reduce the user's workload and shorten the processing time necessary to estimate a causal graph.

In the example depicted in Fig. 1, a DAG 130 is assumed to be a correct causal graph. The correct causal graph is unknown to the user, for example. Here, conventional methods that only constrain the presence or absence of a direct causal relationship between items have difficulty in constraining the indirect causal relationship between items d and e, as indicated by prior knowledge and therefore, may estimate an incorrect DAG 140 as the causal graph.

Here, when any nodes on the DAG 140 are directly coupled by one directed edge, the items corresponding to those nodes are set to have a direct causal relationship. Also, when any nodes on the DAG 140 are indirectly coupled by two or more directed edges via other nodes, the items corresponding to those nodes are set to have an indirect causal relationship. In the example depicted in Fig. 1, items d and e on the DAG 140 are set to have an indirect causal relationship.

In contrast, the information processing device 100 may estimate the DAG 120, which reflects prior knowledge, as a causal graph via the group 110. Like the DAG 130, the DAG 120 appropriately represents the presence or absence of a causal relationship between each item. For example, items d and e on the DAG 120 are set to not have an indirect causal relationship.

Here, while a case where the prior knowledge indicates the presence or absence of a direct or indirect causal relationship between items specified by the user has been described, this is not a limitation. For example, the prior knowledge may also represent rules for classifying multiple items into the multiple groups 110. For example, the prior knowledge may represent rules indicating which attributes one or more items are to have to be classified into the same group 110, based on the attributes of each item.

Here, while a case where the functions of the information processing device 100 are implemented by a single computer has been described, this is not limiting. For example, the functions of the information processing device 100 may be implemented by multiple computers working together. For example, the functions of the information processing device 100 may be implemented on the cloud.

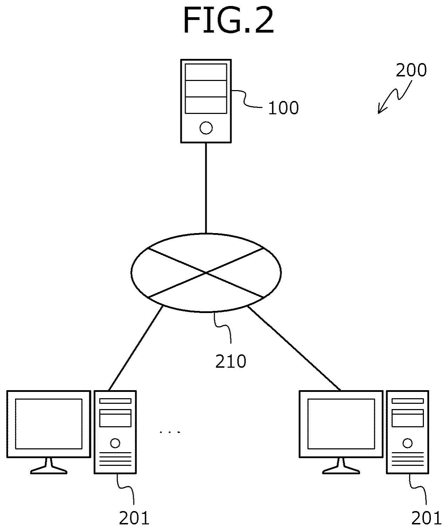

Next, an example of an information processing system 200 to which the information processing device 100 depicted in Fig. 1 is applied will be described with reference to Fig. 2.

Fig. 2 is an explanatory diagram depicting an example of the information processing system 200. In Fig. 2, the information processing system 200 includes the information processing device 100 and one or more client devices 201.

In the information processing system 200, the information processing device 100 and the client devices 201 are coupled to each other via a wired or wireless network 210. The network 210 may be, for example, a local area network (LAN), a wide area network (WAN), or the Internet.

The information processing device 100 is a computer that facilitates accurate estimation of a causal graph. The information processing device 100 obtains a processing request requesting estimation of a causal graph. The information processing device 100 obtains the processing request by, for example, receiving the processing request from any of the client devices 201. The processing request may include, for example, tabular data representing multiple combinations of values respectively for multiple items. The information processing device 100 may obtain the processing request by receiving input of the processing request based on a user's operation input.

The information processing device 100 obtains prior knowledge. For example, the information processing device 100 obtains prior knowledge by receiving the prior knowledge from the client device 201. The prior knowledge indicates, for example, whether there is a causal relationship between any of multiple items. The information processing device 100 may obtain the prior knowledge by receiving prior knowledge input based on a user's operation input.

In response to the processing request, the information processing device 100 refers to the prior knowledge and generates a DAG, based on tabular data. For example, the information processing device 100 refers to the prior knowledge and classifies multiple items into multiple groups. For example, the information processing device 100 uses the tabular data to search for a causal order that indicates, among the multiple groups, the presence of a causal relationship between at least some of the classified groups in a sequence (direction) from one group to another.

For example, the information processing device 100 outputs a DAG corresponding to the discovered causal order as a causal graph. For example, the information processing device 100 transmits a DAG corresponding to the discovered causal order to the client device 201 as a causal graph. For example, the information processing device 100 may output the DAG corresponding to the discovered causal order as a causal graph so that the user may refer to the DAG. The information processing device 100 is, for example, a server or a PC.

The client devices 201 are each a computer used by a user who wishes to estimate a causal graph. The client device 201 generates a processing request based on the user's operation input. The client device 201 transmits the processing request to the information processing device 100. The client device 201 receives the DAG constituting the causal graph, from the information processing device 100. The client device 201 outputs the DAG constituting the causal graph, so that the user may refer to the DAG. The client device 201 is, for example, a PC, a tablet terminal, or a smartphone.

Here, while a case where the information processing device 100 is a computer different from the client device 201 has been described, this is not limiting. For example, the information processing device 100 may have the functionality of the client device 201 and may also operate as the client device 201. In this case, the information processing system 200 may omit the one or more client devices 201.

Next, an example of application of the information processing system 200 will be described. The information processing system 200 may be applied, for example, in the medical field. For example, the information processing system 200 may be applied when attempting to estimate a causal graph based on tabular data representing multiple combinations of values for multiple items, including an item related to the expression level of a gene in a patient with a specific disease. For example, the information processing system 200 may be applied when attempting to estimate a causal graph based on tabular data representing multiple combinations of values for multiple items, including an item related to the ingredients of a specific drug.

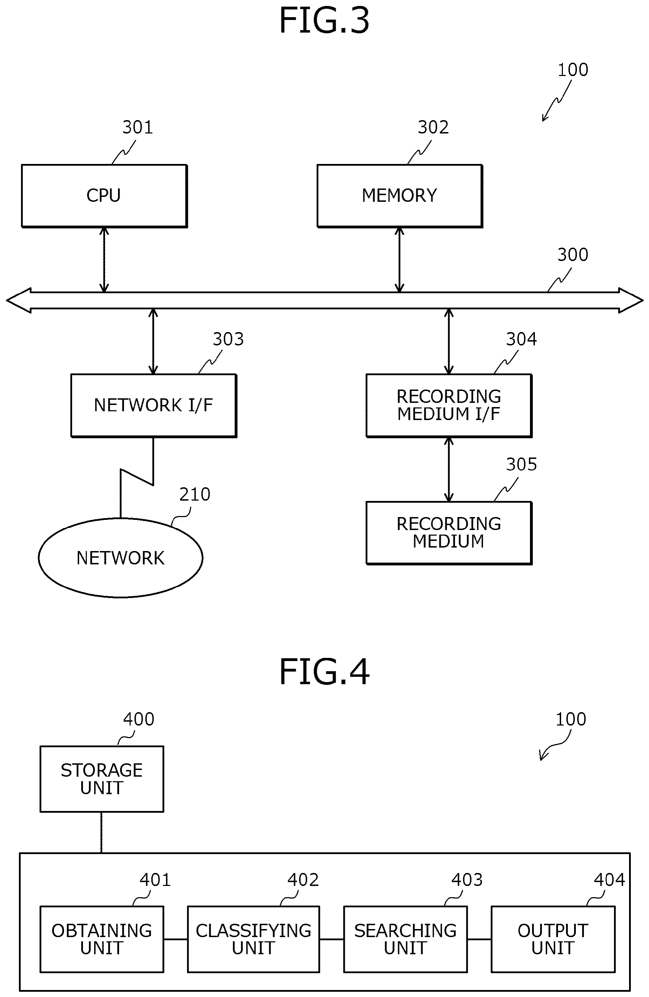

Next, an example of a hardware configuration of the information processing device 100 is described with reference to Fig. 3.

Fig. 3 is a block diagram of an example of a hardware configuration of the information processing device 100. In Fig. 3, the information processing device 100 has a central processing unit (CPU) 301, a memory 302, a network interface (I/F) 303, a recording medium I/F 304, and a recording medium 305. Further, the components are connected to each other by a bus 300.

Here, the CPU 301 governs overall control of the information processing device 100. The memory 302, for example, includes a read-only memory (ROM), a random access memory (RAM), and a flash-ROM. In particular, for example, the flash-ROM and/or ROM stores therein various programs and the RAM is used as a work area of the CPU 301. Programs stored to the memory 302 are loaded onto the CPU 301, whereby encoded processes are executed by the CPU 301.

The network I/F 303 is connected to the network 210 via a communications line and is connected to other computers through the network 210. Further, the network I/F 303 administers an internal interface with the network 210 and controls the input and output of data with respect to the other computers. The network I/F 303, for example, is a modem, a LAN adapter, or the like.

The recording medium I/F 304 controls the reading and writing of data with respect to the recording medium 305 under the control of the CPU 301. The recording medium I/F 304 is, for example, a disc drive, a solid-state drive (SSD), a universal serial bus (USB) port, or the like. The recording medium 305 is a nonvolatile memory storing data written thereto under the control of the recording medium I/F 304. The recording medium 305 is, for example, a disc, a semiconductor memory, a USB memory, or the like. The recording medium 305 may be removable from the information processing device 100.

In addition to the components above, the information processing device 100 may include, for example, a keyboard, a mouse, a display, a printer, a scanner, a microphone, a speaker, etc. Further, the information processing device 100 may further have the recording medium I/F 304 and/or the recording medium 305 in plural. The information processing device 100 may omit the recording medium I/F 304 and/or the recording medium 305.

An example of a hardware configuration of the client device 201 is the same as the example of the hardware configuration of the information processing device 100 depicted in Fig. 3 and thus, description thereof is omitted herein.

Next, an example of a functional configuration of the information processing device 100 will be described with reference to Fig. 4.

Fig. 4 is a block diagram depicting an example of the functional configuration of the information processing device 100. The information processing device 100 includes a storage unit 400, an obtaining unit 401, a classifying unit 402, a searching unit 403, and an output unit 404.

The storage unit 400 is implemented, for example, by a storage area such as a memory 302 or a recording medium 305 depicted in Fig. 3. While the following description will be given of a case in which the storage unit 400 is included in the information processing device 100, this is not limiting. For example, the storage unit 400 may be included in a device other than the information processing device 100, and the contents stored in the storage unit 400 may be accessible from the information processing device 100.

The obtaining unit 401 to the output unit 404 function as an example of a controller. For example, functions of the obtaining unit 401 to the output unit 404 are implemented by, for example, causing a CPU 301 to execute a program stored in a storage area such as the memory 302 or the recording medium 305 depicted in Fig. 3, or by a network I/F 303. The processing results of each functional unit are stored, for example, to a storage area such as the memory 302 or the recording medium 305 depicted in Fig. 3.

The storage unit 400 stores various information that is referred to or updated during the processes by the functional units. The storage unit 400 stores, for example, tabular data representing multiple combinations of values for multiple items. The storage unit 400 may also store, for example, attributes of each item. The tabular data is obtained, for example, by the obtaining unit 401.

The storage unit 400 stores, for example, prior knowledge regarding multiple items. The prior knowledge includes, for example, the designation of two or more items that have no direct or indirect causal relationship. The prior knowledge includes, for example, the designation of two or more items that have a direct causal relationship. The prior knowledge includes, for example, the designation of two or more items that have an indirect causal relationship. The prior knowledge may include rules for classifying multiple items in to multiple groups. The rules indicate, for example, what attributes one or more items are to have to be classified into the same group, based on the attributes of each item. The prior knowledge is obtained, for example, by the obtaining unit 401. The prior knowledge may be set in advance by the user.

The obtaining unit 401 obtains various pieces of information used in the processes be the functional units and stores the obtained various pieces of information to the storage unit 400 or outputs the obtained information to the functional units. The obtaining unit 401 may output various pieces of information stored in the storage unit 400 to each functional unit. The obtaining unit 401 obtains various pieces of information based on, for example, a user's operational input. The obtaining unit 401 may receive various pieces of information from, for example, a device other than the information processing device 100.

The obtaining unit 401 obtains a processing request requesting that a causal graph be estimated using tabular data. The processing request may include, for example, tabular data. The obtaining unit 401 obtains, for example, the processing request. For example, the obtaining unit 401 obtains the processing request by receiving an input of the processing request. For example, the obtaining unit 401 may obtain the processing request by receiving a processing request from another computer. The other computer is, for example, the client device 201.

The obtaining unit 401 obtains, for example, tabular data. For example, the obtaining unit 401 obtains the tabular data by receiving an input of the tabular data. For example, the obtaining unit 401 may obtain the tabular data by receiving the tabular data from another computer. The other computer may be, for example, the client device 201. For example, the obtaining unit 401 may obtain the tabular data by extracting the tabular data from a processing request.

The obtaining unit 401 may obtain, for example, the prior knowledge. For example, the obtaining unit 401 may obtain the prior knowledge by receiving input of the prior knowledge. For example, the obtaining unit 401 may obtain the prior knowledge by receiving the prior knowledge from another computer. The other computer may be, for example, the client device 201.

The obtaining unit 401 may receive a start trigger that starts the processing of any the functional units. The start trigger may be, for example, a predetermined operation input by the user. The start trigger may be, for example, reception of predetermined information from another computer. The start trigger may be, for example, output of predetermined information by one of the functional units. The obtaining unit 401, for example, receives a processing request as a start trigger for starting the process of the classifying unit 402 and the searching unit 403.

The classifying unit 402 classifies multiple items in to multiple groups. The classifying unit 402 classifies the multiple items into multiple groups, for example, based on the prior knowledge. For example, the classifying unit 402 classifies the multiple items into multiple groups such that two or more items that do not have a specified direct or indirect causal relationship are classified into the same group. As described, the classifying unit 402 may make preparations for specifying a causal order that allows the prior knowledge to be reflected in the causal graph by reflecting the prior knowledge in the grouping. For example, the classifying unit 402 may determine which two or more items are to be grouped together to specify a causal order so that two or more items that do not have a direct or indirect causal relationship in the causal graph are not erroneously set as having a causal relationship.

For example, the classifying unit 402 may classify multiple items into multiple groups so that two or more items having a specified direct or indirect causal relationship are classified into different groups. This allows the classifying unit 402 to reflect the prior knowledge in the grouping, thereby preparing to reflect the prior knowledge in the causal graph. For example, the classifying unit 402 may determine which two or more items having a direct or indirect causal relationship on the causal graph are to be grouped together to identify a causal order, so that the two or more items may be set as having a causal relationship.

The searching unit 403 searches for a causal order indicating, among the multiple groups, the presence of a causal relationship between at least some of the groups in a sequence (direction) from one group to another. For example, the searching unit 403 searches for a causal order so as to increase the likelihood of an estimation result of a regression model that estimates the value of a downstream item based on the value of an upstream item in the causal relationship. The upstream item in the causal relationship corresponds, for example, to a causal item. An item downstream in a causal relationship corresponds, for example, to an item that is a result. The regression model corresponds to a DAG, which is generated based on a causal order and represents the presence or absence of a causal relationship between items.

The DAG represents the presence of a causal relationship from one item to another item, between at least some of multiple items. The DAG is generated, for example, under a constraint that allows a causal relationship to be established only in the direction from an item belonging to one group to an item belonging to another group that is later in the causal order than the one group. In other words, the DAG is generated under a constraint that prevents a causal relationship from being established in the direction from an item belonging to one group to an item belonging to another group that is upstream (earlier) in the causal order than the one group. The DAG is also generated under a constraint that prevents a causal relationship from being established between items belonging to the same group.

For example, the regression model may correspond to a DAG, which is generated based on a causal order and represents the presence or absence of a causal relationship between groups. For example, the regression model may not correspond to a DAG.

For example, the searching unit 403 searches for a causal order so as to increase the likelihood of the estimation result of the regression model corresponding to the DAG generated based on the causal order. For example, the larger is the likelihood value, the more likely it is. For example, the searching unit 403 searches for a causal order by repeating an update process for updating the causal order until a termination condition is met. For example, the termination condition may be that the causal order has been updated a specified number of times. For example, the termination condition may be that the likelihood of the estimation result of the regression model corresponding to the DAG generated based on the causal order is at least equal to a threshold.

For example, the update process includes generating a new candidate causal order by modifying the current causal order. Examples of the modification include changing the position of one group in the causal order, exchanging the positions of two groups in the causal order, or reversing one section in the causal order. For example, the modification is performed randomly.

The update process includes, for example, generating a DAG based on the current causal order. For example, the update process includes generating a DAG under a constraint that allows a causal relationship to be established only in the direction from an item belonging to one of the groups, to an item belonging to another group that is downstream to a tail end of the one of the groups in the current causal order. The update process includes, for example, calculating a first likelihood for the estimation result of a regression model corresponding to the DAG generated based on the current causal order.

The update process includes, for example, generating a DAG based on a generated new candidate. For example, the update process includes generating a DAG under a constraint that allows a causal relationship to be established only in the direction from an item belonging to one of the groups, to an item belonging to another group that is downstream to the tail end of the one of the groups in the new candidate. The update process includes, for example, calculating a second likelihood for the estimation result of a regression model corresponding to the DAG generated based on the new candidate.

The update process includes, for example, determining whether the calculated second likelihood is higher than the calculated first likelihood. In the update process, for example, when the second likelihood is higher than the first likelihood, the current causal order is updated with the new candidate. In the update process, for example, when the second likelihood is not higher than the first likelihood, the current causal order is not updated with the new candidate and the current causal order is retained. This allows the searching unit 403 to identify an appropriate causal order corresponding to the prior knowledge and determine which causal order is preferable so as to identify a causal graph that reflects the prior knowledge.

The searching unit 403 obtains a DAG generated based on the discovered causal order. For example, the searching unit 403 obtains a DAG corresponding to the discovered causal order from among a DAG based on the causal order last generated during the repeated update process and a DAG based on the new candidate. This allows the searching unit 403 to accurately estimate a causal graph based on prior knowledge. For example, the searching unit 403 may identify a causal graph corresponding to an appropriate causal order corresponding to the prior knowledge. The searching unit 403 may obtain a DAG that reflects the prior knowledge and that constitutes an appropriate causal graph.

The output unit 404 outputs the processing results of at least one of the functional units. The output format may be, for example, display on a display, print out to a printer, transmission to an external device via the network I/F 303, or storage to a storage area such as the memory 302 or the recording medium 305. This allows the output unit 404 to notify the user of the processing results of at least one of the functional units, thereby improving the convenience of the information processing device 100.

The output unit 404 outputs a DAG generated based on the causal order discovered by the searching unit 403. For example, the output unit 404 outputs the DAG generated based on the causal order discovered by the searching unit 403 so that the user may refer to the DAG. For example, the output unit 404 transmits the DAG generated based on the causal order discovered by the searching unit 403 to another computer. For example, the other computer may be the client device 201.

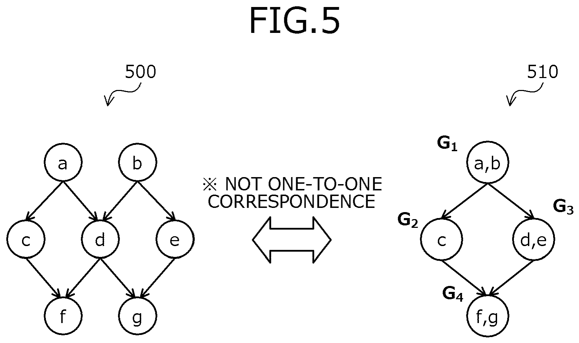

Next, an example of operation of information processing device 100 will be described with reference to Fig. 5.

Fig. 5 is an explanatory diagram depicting an example of operation of information processing device 100. As depicted in Fig. 5, a DAG 500 relating to multiple items may be collapsed to a DAG 510, which groups two or more items among the multiple items that do not have a causal relationship. Therefore, when the information processing device 100 attempts to generate the DAG 500 after restricting the indirect causal relationships between items so as to form the DAG 510, it is conceivable that erroneously establishment of a causal relationship between items that have no indirect causal relationship may be avoided.

Accordingly, it is conceivable that when the information processing device 100 generates the DAG 500, information that enables multiple items to be grouped is easily handled as prior knowledge to be reflected in the DAG 500. For example, information for classifying items that do not have a direct or indirect causal relationship in to the same group, or information for classifying items that have a direct or indirect causal relationship in to different groups, may be considered to be handled as prior knowledge.

Based on such prior knowledge, the information processing device 100 generates the DAG 500 for multiple items so that items that do not have a causal relationship are grouped into the DAG 510, thereby obtaining a causal graph that reflects the prior knowledge. For example, the information processing device 100 may obtain an appropriate causal graph that reflects the prior knowledge by avoiding erroneously establishing a causal relationship between items that do not have an indirect causal relationship.

(5-1) The information processing device 100 obtains, as prior knowledge, information that enables identification of two or more items that do not have a direct or indirect causal relationship. Based on the obtained prior knowledge, the information processing device 100 identifies m groups G₁, G₂, ..., Gₘ in to which d items have been classified, such that two or more items that have no direct or indirect causal relationship are classified into the same group.

(5-2) The information processing device 100 searches for a causal order for the m groups G1, G2, ..., Gm using a probabilistic local search. The information processing device 100 randomly determines, for example, a bijection π{1, 2, ..., m}→{1, 2, ..., m} that represents the causal order. The information processing device 100, for example, repeatedly performs a series of processes (5-2-1), (5-2-2), and (5-2-3) depicted below until a termination condition is met. The termination condition is, for example, the elapse of a specified time. The termination condition is, for example, performing a series of processes a specified number of times.

(5-2-1) The information processing device 100 randomly generates π' by locally updating π. The update may, for example, change the position of any one item in π, exchange the positions of any two items in π, or invert any section in π.

(5-2-2) The information processing device 100 generates a DAG(π) that follows the order G_{π(1)}, Gπ₍₂₎, ..., Gπ₍ₘ₎ corresponding to π. The DAG may be generated by utilizing an existing generation method under the constraint that, for example, a causal relationship may be established only in the direction j→j' between j∈Gπ₍ₖ₎ and j'∈Gπ_{(k')} where k<k'. The information processing device 100 calculates the likelihood L(π) of the generated DAG(π). The likelihood is calculated, for example, according to the type of item. For example, when the item values are continuous, the likelihood corresponds to super-Gaussian. For example, when the item values are binary, the likelihood corresponds to cross-entropy. The information processing device 100 generates a DAG(π') that follows the order Gπ'₍₁₎, Gπ'₍₂₎, ..., Gπ'₍ₘ₎ corresponding to π'. The information processing device 100 calculates the likelihood L(π') of the generated DAG(π').

(5-2-3) When likelihood L(π)<likelihood L(π'), the information processing device 100 updates π to π'. This allows the information processing device 100 to optimize π. Here, the information processing device 100 may control the processing time necessary for the search using a termination condition. Therefore, the user may control how many of the m! possible causal orders to consider using the termination condition.

(5-3) The information processing device 100 outputs, as a causal graph, a DAG(π) that follows the order Gπ₍₁₎, Gπ₍₂₎, ..., Gπ₍ₘ₎ corresponding to the discovered π. The DAG(π) has already been generated, for example, during the search process. This allows the information processing device 100 to output a DAG that reflects prior knowledge as a causal graph. The information processing device 100 may make the DAG that reflects prior knowledge usable as a causal graph.

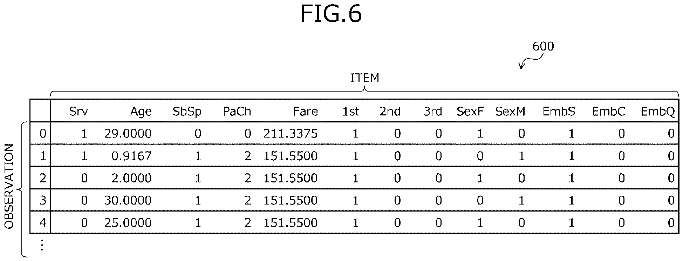

Next, a specific example of the operation of the information processing device 100 will be described using Figs. 6 to 9.

Figs. 6, 7, 8, and 9 are explanatory diagrams depicting a specific example of the operation of the information processing device 100. In Fig. 6, the information processing device 100 obtains tabular data 600. The tabular data 600 is called Titanic. Each record in the tabular data 600 corresponds to one passenger on the Titanic.

Srv is a flag indicating whether a passenger survived. For example, when the flag has a value of 1, it indicates that the passenger survived, and when the flag has a value of 0, it indicates that the passenger has died. Age indicates the age of the passenger. SbSp indicates the total number of siblings who boarded with the passenger. PaCh indicates the total number of parents and children who boarded with the passenger. Fare indicates the fare of the passenger.

1st is a flag indicating whether the passenger's room is a first-class cabin. For example, when the flag has a value of 1, it indicates that the passenger has a first-class cabin, and when the flag has a value of 0, it indicates that the passenger does not have a first-class cabin. 2nd is a flag indicating whether the passenger is in a second-class cabin. For example, when the flag has a value of 1, it indicates that the passenger has a second-class cabin, and when the flag has a value of 0, it indicates that the passenger does not have a second-class cabin. 3rd is a flag indicating whether the passenger has a third-class cabin. For example, when the flag has a value of 1, it indicates that the passenger has a third-class cabin, and when the flag has a value of 0, it indicates that the passenger does not have a third-class cabin.

SexF is a flag indicating whether the passenger is female. For example, when the flag has a value of 1, it indicates that the passenger is female, and when the flag has a value of 0, it indicates that the passenger is not female. SexM is a flag indicating whether the passenger is male. For example, when the flag has a value of 1, it indicates that the passenger is male, and when the flag has a value of 0, it indicates that the passenger is not male.

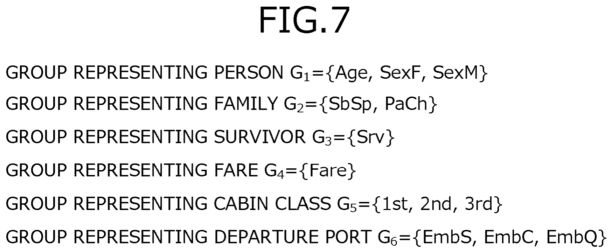

EmbS is a flag indicating whether the departure port where the passenger boarded the ship is "S." For example, when the flag has a value of 1, it indicates that the departure port is "S," and when the flag has a value of 0, it indicates that the departure port is not "S." EmbC is a flag indicating whether the departure port where the passenger boarded the ship is "C." For example, when the flag has a value of 1, it indicates that the departure port is "C," and when the flag has a value of 0, it indicates that the departure port is not "C." EmbQ is a flag indicating whether the departure port where the passenger boarded the ship is "Q." For example, when the flag has a value of 1, it indicates that the departure port is "Q," and when the flag has a value of 0, it indicates that the departure port is not "Q." Next, Fig. 7 is described.

In Fig. 7, the information processing device 100 classifies multiple items into multiple groups based on a user's operational input and identifies the multiple groups. In the example depicted in Fig. 7, a group G₁={Age,SexF,SexM} representing a person is identified. A group G₂={SbSp,PaCh} representing a family is identified. A group G₃={Srv} representing a survivor is identified. A group G₄={Fare} representing a fare is identified. A group G₅={1st,2nd,3rd} representing a cabin class is identified. A group G₆={EmbS,EmbC,EmbQ} representing a departure port is identified.

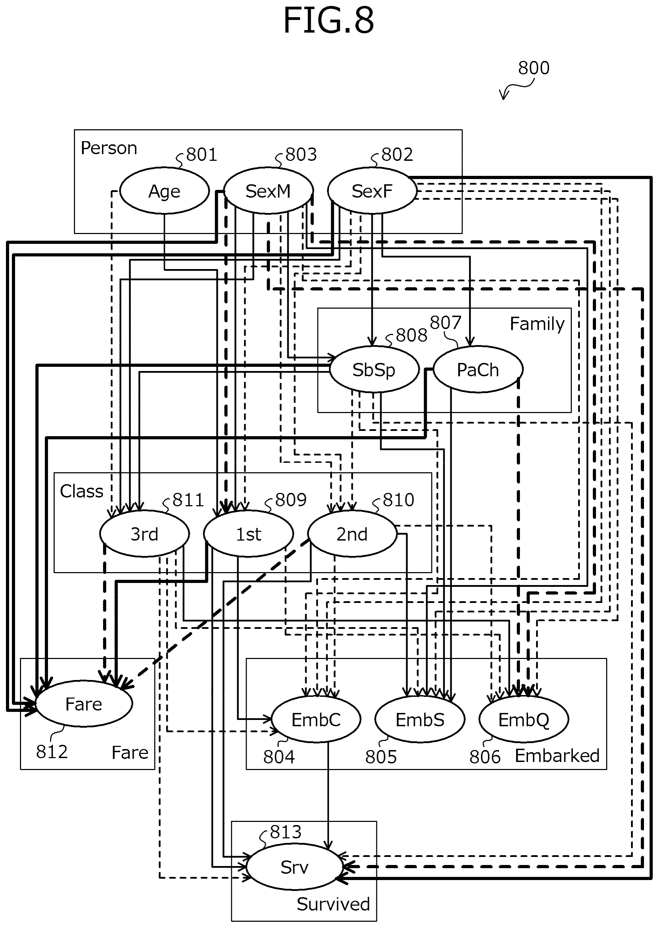

As a result, the information processing device 100 may prevent a causal relationship from being established between the items in the group G₁={Age,SexF,SexM}. Similarly, the information processing device 100 may prevent a causal relationship from being established between the items in the group G₂={SbSp,PaCh}. Similarly, the information processing device 100 may prevent a causal relationship from being established between the items in the group G₅={1st,2nd,3rd}. Similarly, the information processing device 100 may prevent a causal relationship from being established between the items in the group G₆={EmbS,EmbC,EmbQ}. Next, Fig. 8 is described.

In Fig. 8, the information processing device 100, similar to Fig. 5, searches for a causal order for the groups G₁, G₂, ..., G₆ by referring to the tabular data 600 using probabilistic local search. Here, it is assumed that the information processing device 100 has identified groups G1, G2, G5, G4, G6, and G3 as an appropriate causal order. The information processing device 100 obtains and outputs a DAG 800, which is a causal graph, based on the causal order identified as a result of the search. The DAG 800 is generated during the search process, for example. The DAG 800 may also be newly generated based on the causal order identified as a result of the search. The information processing device 100 displays, for example, the DAG 800.

The DAG 800 includes nodes 801 to 813 representing Age, SexF, SexM, EmbC, EmbS, EmbQ, PaCh, SbSp, 1st, 2nd, 3rd, Fare, and Srv, respectively. In the example depicted in Fig. 8, for convenience, nodes representing one or more items belonging to the same group are represented by a rectangle.

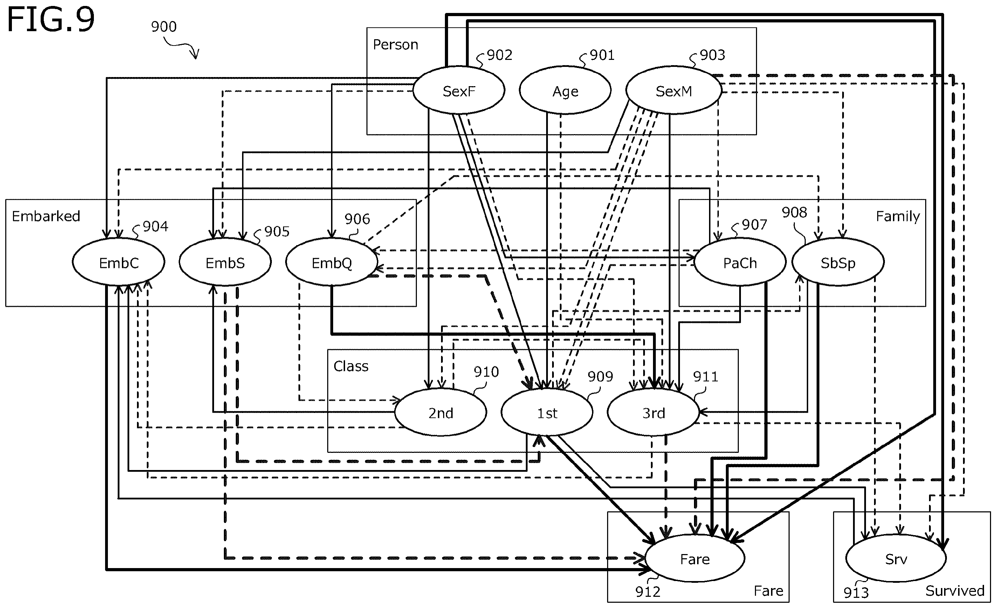

As described, the information processing device 100 may obtain the DAG 800 that constitutes an appropriate causal graph so that no direct or indirect causal relationships are established between items belonging to the same group. For example, the information processing device 100 may prevent an indirect causal relationship from PaCh to SbSp, or an indirect causal relationship from EmbQ to EmbC, from being established on the DAG 800. Next, Fig. 9 is described.

Fig. 9 depicts a case where a causal graph is estimated by referring to the tabular data 600 using a conventional method that only restricts the presence or absence of a direct causal relationship between items. For example, with the conventional method, it is conceivable for a DAG 900 to be estimated as a causal graph. The DAG 900 includes nodes 901 to 913 representing Age, SexF, SexM, EmbC, EmbS, EmbQ, PaCh, SbSp, 1st, 2nd, 3rd, Fare, and Srv, respectively. In the example depicted in Fig. 9, for convenience, nodes representing one or more items belonging to the same group are represented by a rectangle.

As described above, with conventional methods, indirect causal relationships may be established between items belonging to the same group. For example, with conventional methods, an indirect causal relationship from PaCh to SbSp and an indirect causal relationship from EmbQ to EmbC may be established on the DAG 900. In contrast, the information processing device 100 may obtain the DAG 800, which is an appropriate causal graph that reflects prior knowledge and prevents direct or indirect causal relationships between items belonging to the same group, as described above.

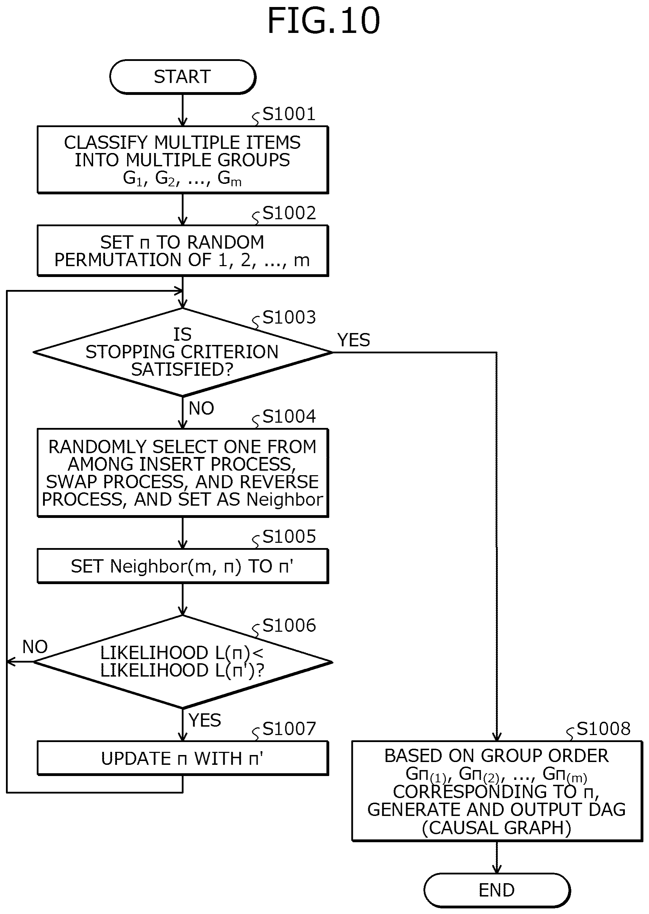

Next, an example of an overall processing procedure executed by the information processing device 100 will be described with reference to Fig. 10. The overall processing is implemented, for example, by the CPU 301, storage areas such as the memory 302 and the recording medium 305, and the network I/F 303 depicted in Fig. 3.

Fig. 10 is a flowchart depicting an example of the overall processing procedure. In Fig. 10, the information processing device 100 classifies multiple items in to multiple groups G₁, G₂, ..., Gₘ (step S1001). The information processing device 100 sets π to a random permutation of 1, 2, ..., m (step S1002).

The information processing device 100 determines whether a stopping criterion has been met (step S1003). Here, when the stopping criterion is satisfied (step S1003: YES), the information processing device 100 proceeds to the process at step S1008. On the other hand, when the stopping criterion is not satisfied (step S1003: NO), the information processing device 100 proceeds to the process at step S1004.

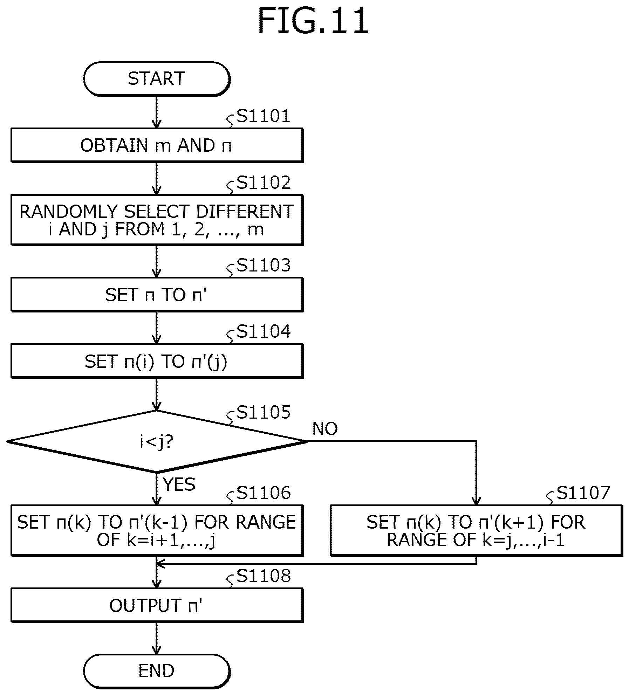

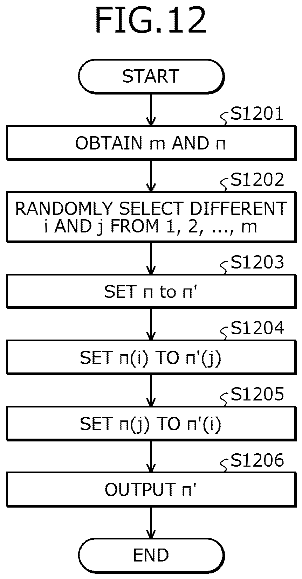

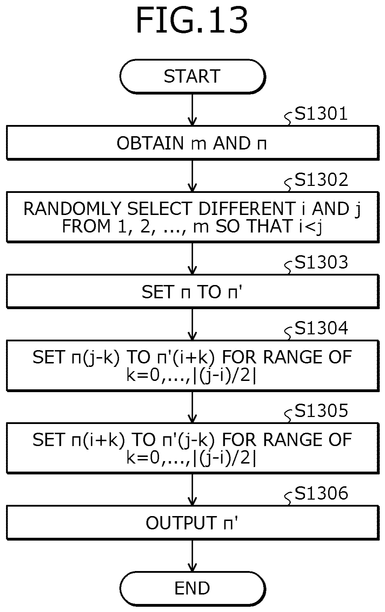

At step S1004, the information processing device 100 randomly selects one of the processes from among an insert process described later with reference to Fig. 11, a swap process described later with reference to Fig. 12, and a reverse process described later with reference to Fig. 13, and sets the selected process as Neighbor (step S1004). The information processing device 100 sets Neighbor(m,π) to π' (step S1005).

The information processing device 100 determines whether likelihood L(π)<likelihood L(π') is satisfied (step S1006). Here, when likelihood L(π)<likelihood L(π') is not satisfied (step S1006: NO), the information processing device 100 returns to the process at step S1003. On the other hand, when likelihood L(π)<likelihood L(π') is satisfied (step S1006: YES), the information processing device 100 proceeds to the process at step S1007.

At step S1007, the information processing device 100 updates π with π' (step S1007). The information processing device 100 returns to the process at step S1003.

At step S1008, the information processing device 100 generates and outputs a DAG, which is a causal graph, based on the group order Gπ₍₁₎, Gπ₍₂₎, ..., Gπ₍ₘ₎ corresponding to π (step S1008). The information processing device 100 ends the overall processing.

Next, an example of a procedure of the insert process executed by the information processing device 100 will be described with reference to Fig. 11. The insert processing is implemented by, for example, the CPU 301, a storage area such as the memory 302 or the recording medium 305, and the network I/F 303 depicted in Fig. 3.

Fig. 11 is a flowchart depicting an example of the procedure of the insert process. In Fig. 11, the information processing device 100 obtains m and π (step S1101). The information processing device 100 randomly selects different i and j from 1, 2, ..., m (step S1102). The information processing device 100 sets π to π' (step S1103). The information processing device 100 sets π(i) to π'(j) (step S1104).

The information processing device 100 determines whether i<j is satisfied (step S1105). Here, when i<j is satisfied (step S1105: YES), the information processing device 100 proceeds to process at step S1106. On the other hand, when i<j is not satisfied (step S1105: NO), the information processing device 100 proceeds to process at step S1107.

At step S1106, the information processing device 100 sets π(k) to π'(k-1) for the range of k=i+1, ..., j (step S1106). The information processing device 100 proceeds to process at step S1108.

At step S1107, the information processing device 100 sets π(k) to π'(k+1) for the range of k=j, ..., i-1 (step S1107). The information processing device 100 proceeds to process at step S1108.

At step S1108, the information processing device 100 outputs π' (step S1108). The information processing device 100 ends the insert process.

Next, an example of a procedure of the swap process executed by the information processing device 100 will be described with reference to Fig. 12. The swap process is implemented by, for example, the CPU 301, a storage area such as the memory 302 or the recording medium 305, and the network I/F 303 depicted in Fig. 3.

Fig. 12 is a flowchart depicting an example of the procedure of the swap process. In Fig. 12, the information processing device 100 obtains m and π (step S1201). The information processing device 100 randomly selects different i and j from 1, 2, ..., m (step S1202).

The information processing device 100 sets π to π' (step S1203). The information processing device 100 sets π(i) to π(j) (step S1204). The information processing device 100 sets π(j) to π'(i) (step S1205). The information processing device 100 outputs π' (step S1206). The information processing device 100 ends the insert process.

Next, an example of the procedure of the reverse process executed by the information processing device 100 will be described with reference to Fig. 13. The reverse process is implemented by, for example, the CPU 301 depicted in Fig. 3, a storage area such as the memory 302 or the recording medium 305, and the network I/F 303.

Fig. 13 is a flowchart depicting an example of the procedure of the reverse process. The information processing device 100 obtains m and π (step S1301). The information processing device 100 randomly selects different i and j from 1, 2, ..., m so that i<j (step S1302).

The information processing device 100 sets π to π' (step S1303). The information processing device 100 sets π(j-k) to π'(i+k) for the range of k=0, ...,|(j-i)/2| (step S1304). The information processing device 100 sets π(i+k) to π'(j-k) for the range of k=0, ...,|(j-i)/2| (step S1305). The information processing device 100 outputs π' (step S1306). The information processing device 100 ends the reverse process.

As described above, the information processing device 100 may classify multiple items into multiple groups. The information processing device 100 may search for a causal order in the multiple groups so as to increase the likelihood of an estimation result of a regression model that estimates the value of a downstream item based on the value of an upstream item in a causal relationship. The information processing device 100 may output a DAG, which is generated based on the discovered causal order and indicates that a causal relationship exists between at least one of the multiple items and another, from the at least one to the other. This allows the information processing device 100 to estimate and make available a DAG that constitutes an appropriate causal graph.

The information processing device 100 may classify multiple items in to multiple groups so that two or more items that do not have a specified direct or indirect causal relationship are classified in to the same group. This allows the information processing device 100 to appropriately reflect, through grouping, the presence or absence of a known causal relationship between items in the DAG that constitutes the causal graph.

The information processing device 100 may classify multiple items into multiple groups so that two or more items that have a specified direct or indirect causal relationship are classified into different groups. This allows the information processing device 100 to properly reflect, through grouping, the presence or absence of a known causal relationship between items in the DAG that constitutes the causal graph.

The information processing device 100 may search for a causal order so as to increase the likelihood of the estimation result of a regression model corresponding to a DAG generated based on the causal order. This allows the information processing device 100 to use an appropriate regression model and accurately search for a causal order.

The information processing device 100 may search for a causal order by repeating an update process. In the update process, the information processing device 100 may determine whether the likelihood of the estimation result of a regression model corresponding to a DAG based on a new candidate is higher than the likelihood of the estimation result of a regression model corresponding to a DAG based on the causal order. In the update process, the information processing device 100 may update the causal order with the new candidate when it is determined that the likelihood is higher. This allows the information processing device 100 to accurately search for a causal order. The information processing device 100 may control the processing time needed to search for a causal order.

The information processing device 100 may repeat the update process a specified number of times. This allows the information processing device 100 to repeatedly perform the update process the number of times desired by the user.

According to the information processing device 100, the update process may be repeatedly performed until the likelihood of the estimation result of the regression model corresponding to the DAG based on the causal order becomes at least equal to a threshold. This allows the information processing device 100 to repeatedly perform the update process so as to accurately search for the causal order.

According to the information processing device 100, in the update process, a DAG based on the causal order and a DAG based on a new candidate may be generated. According to the information processing device 100, of the DAG based on the causal order and the DAG based on the new candidate that are last generated in the update process, the DAG that corresponds to the discovered causal order may be output. This allows the information processing device 100 to use DAGs that have already been generated in the search process.

According to the information processing device 100, a DAG generated under a constraint that allows a causal relationship to be set only in the direction from an item belonging to an upstream group, to an item belonging to a downstream group in the discovered causal order may be output. This allows the information processing device 100 to estimate and make available a DAG that forms an appropriate causal graph.

The information processing method described in the present embodiments may be implemented by executing a prepared program on a computer such as a personal computer and a workstation. The program is stored on a non-transitory, computer-readable recording medium such as a hard disk, a flexible disk, a compact disc read-only memory (CD-ROM), a magneto-optical (MO) disc, and a digital versatile disc (DVD), read out from the computer-readable medium, and executed by the computer. The program may be distributed through a network such as the Internet.

According to one aspect, a causal graph may be accurately estimated.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

## Claims

1. An information processing program for causing a computer to execute a process, the process comprising:
classifying a plurality of items in to a plurality of groups;
searching for a causal order so as to increase a likelihood of an estimation result of a regression model, the causal order indicating a presence of a causal relationship in a direction from one group to another group between at least some of the plurality of groups, the regression model estimating a value of a downstream item based on a value of an upstream item in a causal relationship; and
outputting a directed acyclic graph generated based on the discovered causal order and representing a presence of a causal relationship in a direction from one item to another item, between at least some of the plurality of items.

2. The information processing program according to claim 1, wherein
the classifying includes classifying the plurality of items in to the plurality of groups such that two or more items free of both a specified direct causal relationship and a specified indirect causal relationship are classified into a same group.

3. The information processing program according to claim 2, wherein
the classifying includes classifying the plurality of items in to the plurality of groups such that two or more items having the specified direct causal relationship or the specified indirect causal relationship are classified into different groups.

4. The information processing program according to claim 2, wherein
the searching includes searching for the causal order so as to increase the likelihood of the estimation result of the regression model that corresponds to a directed acyclic graph generated based on the causal order and representing a presence of a causal relationship in a direction from one item to another item, between at least some of the plurality of items.

5. The information processing program according to claim 4, wherein
the regression model is a first regression model, and
the searching includes searching for the causal order by repeating an update process that includes updating the causal order with a new candidate causal order that is obtained by processing the causal order, the causal order being updated with the new candidate causal order when a likelihood of an estimation result of a second regression model that corresponds to a directed acyclic graph that is based on the new candidate causal order is higher than the likelihood of the estimation result of the first regression model.

6. The information processing program according to claim 5, wherein
the searching includes repeating the update process a specified number of times.

7. The information processing program according to claim 5, wherein
the searching includes repeating the update process until the likelihood of the estimation result of the first regression model that corresponds to the directed acyclic graph based on the causal order becomes equal to or greater than a threshold.

8. The information processing program according to claim 5, wherein
the update process includes generating the directed acyclic graph based on the causal order and the directed acyclic graph based on the new candidate causal order, and
the outputting includes outputting any one of the directed acyclic graph most recently generated based on the causal order and the directed acyclic graph most recently generated based on the new candidate causal order, the any one corresponding to the discovered causal order.

9. The information processing program according to any one of claims 1 to 7, wherein
the outputting includes outputting the directed acyclic graph representing the presence of a causal relationship from one item to another item between at least some of the plurality of items, the directed acyclic graph being generated under a constraint that a causal relationship is settable only in a direction from an item belonging to an upstream group to an item belonging to a downstream group in the discovered causal order.

10. An information processing method executed by a computer, the method comprising:
classifying a plurality of items in to a plurality of groups;
searching for a causal order so as to increase a likelihood of an estimation result of a regression model, the causal order indicating a presence of a causal relationship in a direction from one group to another group between at least some of the plurality of groups, the regression model estimating a value of a downstream item based on a value of an upstream item in a causal relationship; and
outputting a directed acyclic graph generated based on the discovered causal order and representing a presence of a causal relationship in a direction from one item to another item, between at least some of the plurality of items.

11. An information processing device, comprising:
a memory; and
a processor coupled to the memory, the processor configured to execute a process including:
classifying a plurality of items in to a plurality of groups;
searching for a causal order so as to increase a likelihood of an estimation result of a regression model, the causal order indicating a presence of a causal relationship in a direction from one group to another group between at least some of the plurality of groups, the regression model estimating a value of a downstream item based on a value of an upstream item in a causal relationship; and
outputting a directed acyclic graph generated based on the discovered causal order and representing a presence of a causal relationship in a direction from one item to another item, between at least some of the plurality of items.
